# EUROPEAN PATENT SPECIFICATION

(11) **EP 0 957 458 B1**
(45) Date of publication and mention of the grant of the patent: **07.01.2004**
(21) Application number: 98950503.7
(22) Date of filing: 07.10.1998
(51) Int. Cl.: G07F 7/00, G07G 5/00

(54) **CONTROL SYSTEM FOR CAR RENTAL**
KONTROLLSYSTEM FÜR AUTOVERMIETUNG
SYSTEME DE CONTROLE POUR LOCATION DE VEHICULES

(30) Priority: 07.10.1997 US 946490
(43) Date of publication of application: 17.11.1999
(73) Proprietor: Segura Glasche, Luis Gabriel, Garza Garc a, Nuevo Le n (MX)
(72) Inventor: Segura Glasche, Luis Gabriel, Garza Garc a, Nuevo Le n (MX)
(74) Representative: Altenburg, Udo, Dipl.-Phys.
(86) International application number: PCT/MX1998/000046
(87) International publication number: WO 1999/018545

(56) References cited:
- EP-A- 0 309 318
- EP-A- 0 694 885
- FR-A- 2 612 319
- US-A- 5 162 989
- US-A- 5 289 369

## Description

### BACKGROUND OF THE INVENTION:

### A: FIELD OF THE INVENTION

The present invention is related to a system to authorize the use of at least one car according to the preamble of claim 1, and more specifically to a car-rental system which allows a car to be used for rent to specific customers or for users in utilitarian cars, in determined times and dates, by means of magnetic cards having information such as data customer or codes, times and dates recorded therein and programmable card lecture devices associated and placed at the car, to read the card and enabling the car systems to use the car.

### B. DESCRIPTION OF THE RELATED ART.

There are a number of known devices for blocking or enabling the use of a car, by means of magnetic cards or the like, having a code recorded therein to be identified by an apparatus in said car, and enabling it for its use.

There are also a number of known devices for closing and opening a door or other apparatuses, also by means of magnetic cards having an identification code recorded therein, to be introduced at a slot of a locking system placed at the door, to allow said door to be opened when the code of the card coincide with that of the locking system.

U. S. Patent No. 5, 289,369 of Hirshberg, disclose a semi-automatic car-rental system including an identity and entitlement checking device, cooperating with a customer identification card including a code recorded therein (as a magnetic key) in order to identify said code and enabling a customer to enter, actuate and use the car. Such system also includes a transmission device placed in the car, to inform a computer at a central control station about the location of the car, and allow the central control station to evaluate the data for entitlement verification and transmitting a command authorizing or not the use of the car for rent, through said computer.

The car is also equipped with a computer, enabling the customer to check the operation conditions of the car, and transmit this information to the computer at the central station, to check them an provide service when it is required.

The number of components and the sophistication thereof makes such system to be very expensive and somewhat complex in its handling because the control of the system is made by personnel from the central control station at real time and does not allow it to be programmed in advance.

There are other general device-rental systems such as that disclosed in the U. S. patent No. 5,162,989 of Matsuda, which also includes a source information memory for previously storing therein rental source information, to be used in connection with an IC card for permitting a customer to execute a number of input operations for renting such information.

EP-A-0 694 885 relates to a shared vehicle rental system with a plurality of motor vehicles, a parking area for users to rent motor vehicles therefrom and to return motor vehicles thereto, and a control center for supervising the vehicles. The system registers the users in groups depending on a usage time zone in which the users use the motor vehicles, identifies registration information of the users recorded on IC cards of the users, and supervises the vehicles and the parking area based on the registration information.

FR-A-2 612 319 relates to a method and apparatus for control of the use of one or several cars, whereby several parameters relating to conditions of use of a car are stored on a card for being processed later whereby the storage requires the use of a ID code.

US 5,289,369 relates an automated car rental system based on specially equipped fleet of cars for hire and one or more control stations.

The car-rental system in accordance with the present invention, allows each car of a fleet to be used for rent to specific customers in pre-programmed times and dates, by means of magnetic cards or the like, having data customer or code, times and dates recorded therein and card lecture devices placed at the car, to read the card and enabling the car systems allowing the car to be used when the data of a magnetic card coincide with the data of said lecture means.

Some of the applications of the present invention are:
a) For rental car business:
   - Controlling the number of rents
   - Controlling the time of the rent
   - Vehicle mileage control
   - Controlling the use of the cars by the employees.
   - Monitoring vehicle fuel consumption.
   - Provide an adequate control of incomes
b) For leasing companies
   - Controlling the use of the vehicle in case of failure of payment by the client
c) For companies with fleets of utilitarian vehicles.
   - Controlling the use of the vehicle only for authorized persons
   - Controlling the use of the vehicle for use it only in authorized hours.
   - Vehicle mileage control
   - Vehicle fuel consumption control.

This system allows to program the use of each car of a fleet by means of magnetic cards or the like, for determined customers in different preprogrammed times and dates, depending on the coincidence of the data recorded in each magnetic card issued for each particular car of the fleet.

### SUMMARY OF THE INVENTION

It is therefore a main object of the present invention, to provide a system, which allows a car of a fleet to be used for rent to specific customers in predetermined times and dates.

It is also a main object of the present invention to provide identification means for a customer, having preprogrammed information such as data customer or code, times and dates recorded therein, wherein the identification means is selected from the group consisting in magnetic cards, intelligent cards, chip keys or the like.

It is an additional object of the present invention to provide editing means for recording information such as customer data, times and dates, in the identification means.

It is another object of the present invention to provide lecture devices placed at the vehicle, to read the information recorded in an identification device of a customer and blocking or enabling the car systems to allow the use of the car.

It is a further object of the present invention to provide a device for reading and storing the information stored in the editing device, to be provided to the lecture device of a corresponding car, and the information of the lecture device, to be provided to a control system at a central location.

It is another object of the present invention to provide means for detecting and recording car conditions such as engine conditions, maximum speeds applied to the car by each user and the like.

These objects are achieved by the system with the features according to claim 1. Further embodiments are defined in the dependent claims.

The objects and advantages of the present invention will be apparent to those persons having ordinary skill in the art, from the following detailed description of the invention.

### BRIEF DESCRIPTION OF THE DRAWINGS.

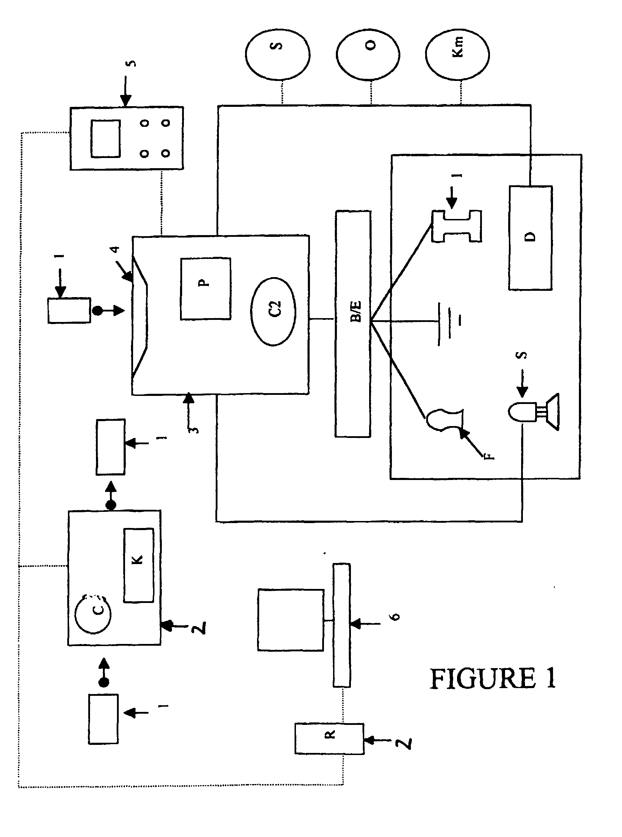

Figure 1 is a block diagram of an embodiment of the car rental system of the present invention, including the whole components thereof.

### DETAILED DESCRIPTION OF THE INVENTION

The car rental system of the present invention comprising:
identification means 1 for each customer, wherein the identification means are selected from the group consisting in magnetic cards, intelligent cards, chip keys and similar devices, and having information such as customer data or codes, times and dates recorded therein;
editing means 2 for recording the identification means 1 with information such as customer data or code, times and dates, for enabling the car systems such as the starting system S, the ignition system I and the fuel pump F, to allow a car to be used by such identification means 1 for the times and dates specified in said identification means 1, and including clock means C, for programming times and dates in the identification means 1, memory means (not shown) to store information recorded in each identification means for the corresponding cars, and information receiving and providing means R, to provide and receive the above referred information;
lecture means 3 placed into the car, which is capable of being programmable with information such as customer data or code, in predetermined time and date sequences and having a housing or slot 4, wherein the identification means 1 can be inserted or slid, for reading the information contained in said identification means 1 and comparing it with the information programmed in said lecture means 3, and if they coincide, enabling the car systems above disclosed, to allow a customer having said identification means 1 to use the car;
said lecture means 3 including: clock means C2 for providing and recognizing time and date information, means P for programming the information about customer data, time and date sequences to be contained therein; data identification means (not shown), to read and identify the information contained in the identification means 1; means (not shown) for detecting and recording car conditions such as engine conditions, maximum speeds S applied to the car by each user, traveled distance Km, oil condition O, battery conditions, etc. some of them taken from the car display D; memory means (not shown) for recording customer data or codes and car conditions; and control means to identify if the information such as customer data, times and dates of the identification means 1 coincide with the information of customer data, times and dates programmed therein, and enabling the car systems such the as the starting system S, ignition system I, fuel system F, etc., to start to use the car;
blocking and enabling means B/E associated with the lecture means 3, for blocking or enabling the above mentioned car systems, to prevent the car to be used if the information of the identification means do not coincide with that recorded in the lecture means 3, or enabling the car systems to operate if the information of the identification means 1 coincides with that of the lecture means 3.
information reading means 5, including memory means, cooperating with the lecture means 3 and with a data processing means 6, for recording the information from said editing means 2 to be provided to the lecture means 3, and from the lecture means 3 to be provided to the data processing means 6, is also included.

Also, data processing means 6, such as a computer, at a central station (not shown), can be provided for recording and controlling all the information from said identification means 1, said editing means 2 and from the lecture means 3 through the information reading means 5, by means of a device R.

All of the above referred components referred as editing means 2, lecture means 3, information reading means 5, blocking or enabling means B/E, data processor means 6, memory means, means for programming the information at the lecture means 3, data identification means, etc. are individual components already existing and available in the market under several trademarks, and therefore they are nor specifically identified.

The car rental method, in accordance with the present invention, comprising in its most general concept, of:
recording identification means 1 for a customer, with information such as customer data, times and dates for using the car, by means of editing means 2, for enabling a specific customer having said identification means 1, to use a car for determined times and dates recorded in said identification means 1; and
reading the information from the identification means 1 by means of lecture means 3 placed outside the car, programmable with information such as customer data, times and dates, to read the information recorded in the identification means 1 and enabling a customer having said identification means 1 to use a car for the determined times and dates recorded in said identification means 1, when such information coincide with the information programmed in the lecture means 3.

For the purpose of management of the car rental business, the method also comprising recording the information from said lecture means 3, into reading means 5, cooperating with the lecture means 3, and recording and controlling the information from the identification means 1 and from said lecture means 3 by means of data processing means 6 at a central station.

In this way, a car-rental business or a company having a float of utilitarian vehicles, let say car No.1, 2, 3, etc., can control the use of each car float. The editing means 2 records a plurality of identification means 1, such as a magnetic card, with customer data or code, time and date, for a corresponding plurality of customers, say customer A, B, C, etc., to use a single car 1, or 2 or 3, etc., and so for each of the other cars of the float.

Each customer (say A) is delivered with a programmed magnetic card and a key for the specific car (say 1) which is renting.

The information recorded in the editing means 2, is recorded in the reading means 5, also called data carrier, to be provided and recorded in the lecture means 3 of each corresponding car, and in turn, the information recorded in the lecture means 3 of the car, can be recorded in the reading means 5, to be provided to the data processing means, for managing the whole system.

In this way, a customer having the key and the magnetic card for a corresponding car, can open the car and introduce the key at the starting system S, but the car systems will be unable until the customer slide the magnetic card into the lecture means 3 placed inside the car, and has about 30 seconds to turn the key and enabling the car systems to allow the car to be used.

The lecture means 3 will read the information (customer data or code, time and date) recorded in the magnetic card of the customer and, if the information coincides with the information contained in said lecture means 3, in the actual time and date contained in said lecture means 3, the customer will be allowed to use the car.

## Claims

1. A system to authorize the use of at least one car of a plurality of cars by a customer, said system including:
identification means (1) for a customer of a plurality of customers, including: magnetic cards, previously programmed with information comprising customer data, times and dates for enabling a customer to use said at least one car; editing means (2) for recording said identification means (1) with the information, for enabling a specific customer having said identification means (1), to use said at least one car for determined times and dates recorded in said identification means (I),
**said system being characterized by:**
lecture means (3) placed at each car of said plurality of cars, said lecture means (3) comprising means for programming therein information comprising data related to each customer of said plurality of customers, said data comprising times and dates during which the car on which said lecture means (3) is placed can be used by each customer of said plurality of customers, wherein said lecture means (3) reads the information recorded in said identification means (1) and enables said customer to access said at least one car and enables means (B/E) for blocking and enabling the car of said at least one car if the information programmed in said lecture means (3) coincides with the information recorded in said identification means (1) and allows said customer to use said at least one car in determined dates and hours recorded in said lecture means (3) and the identification means (1);
means for detecting and recording information related to engine conditions, distances and velocities applied to each car of said plurality of cars by each customer of said plurality of customers in cooperation with said lecture means (3);
information reading means (5), cooperating with said lecture means (3) and with said editing means, in order to read the information recorded in said lecture means (3), comprising times and dates in which each car of said plurality of cars is allowed to be used by each customer of said plurality of customers, customer data, distances and speeds applied to each car of said plurality of cars by each customer of said plurality of customers, and to provide the information to a computer control or vice versa, said information recording means (5) being an individual component; and
data processing means (6), for recording information stored in said editing means and in said lecture means (3).

2. The system as disclosed in claim 1, wherein the identification means (1) is selected from the group consisting of magnetic cards, intelligent cards, and chip keys.

3. The system as disclosed in claim 1, wherein the lecture means (3) also including means for detecting and recording car conditions selected from the group consisting of speeds applied to the car by each user, oil condition, battery conditions and engine conditions.

4. The system as disclosed in claim 1, wherein the lecture means (3) also including means for detecting and recording car conditions as to distances run by each customer.

5. The system as disclosed in claim 1, further comprising a managing system at a central station, for recording and controlling all the information from the editing means and from the lecture means.

6. The system as disclosed in claim 1, wherein the managing system including data processing means to receive and control all the information from the editing means and from the lecture means.

7. The system as disclosed in claim 1, wherein the data processing means comprising means to read the information from the information reading means.

8. The system as disclosed in claim 1, wherein said means (B/E) for blocking and enabling the car systems is selected from the group consisting of starting system, ignition, and fuel system.

## Patentansprüche

1. System zum Autorisieren der Benutzung von mindestens einem Wagen einer Vielzahl von Wagen durch einen Kunden, wobei das System umfasst:
Identifikations-Mittel (1) für einen Kunden aus einer Vielzahl von Kunden, einschließlich: Magnetkarten, die zuvor mit Informationen programmiert wurden, die Kunden-Daten, Zeiten und Daten umfassen, die den Kunden berechtigen, mindestens den Wagen zu benutzen; Editier-Mittel (2) zum Aufzeichnen der Information auf den Identifikations-Mitteln (1), die einen bestimmten Kunden berechtigen, der die Identifikations-Mittel (1) besitzt, mindestens diesen Wagen zu bestimmten Zeiten und Daten zu benutzen, die in den Identifikations-Mitteln (1) aufgezeichnet sind,
wobei das System **gekennzeichnet ist durch**:
Lese-Mittel (3), die in jedem Wagen der Vielzahl von Wagen untergebracht sind, wobei die Lese-Mittel (3) Mittel zum Einprogrammieren von Informationen enthalten, die Daten umfassen, die sich auf jeden Kunden der Vielzahl von Kunden beziehen, wobei die Daten, Zeiten und Daten umfassen, während derer der Wagen, in welchem die Lese-Mittel (3) untergebracht sind, von jedem Kunden der Vielzahl von Kunden benutzt werden kann, wobei das Lese-Mittel (3) die Informationen liest, die in dem Identifikations-Mittel (1) aufgezeichnet sind, und dem Kunden den Zugang zu dem Wagen gewährt und Mittel (B/E) zum Blockieren und Freigeben des Wagens freigibt, wenn die in die Lese-Mittel (3) programmierte Information mit der in den Identifikations-Mitteln (1) aufgezeichneten Informationen übereinstimmt und dem Kunden erlaubt, mindestens den einen Wagen zu bestimmten Daten und Stunden, die in den Lese-Mitteln (3) und den Identifikations-Mitteln (1) aufgezeichnet sind; Mittel zum Erfassen und Aufzeichnen von Informationen, die sich auf den Motorzustand, Entfernungen und Geschwindigkeiten beziehen, welche in jedem Wagen der Vielzahl von Wagen **durch** jeden Kunden der Vielzahl von Kunden gefahren werden, in Kooperation mit den Lese-Mitteln (3);
Informations-Lese-Mittel (5), welche mit den Lese-Mitteln (3) und den Editier-Mitteln kooperieren, um die Informationen zu lesen, die in den Lese-Mitteln (3) aufgezeichnet sind, die Zeiten und Daten umfassen, zu denen jeder Wagen einer Vielzahl von Wagen **durch** jeden Kunden einer Vielzahl von Kunden benutzt werden darf, Kunden-Daten, Entfernungen und Geschwindigkeiten, die mit jedem Wagen der Vielzahl von Wagen **durch** jeden Kunden der Vielzahl von Kunden gefahren wurden, und die Informationen einem Computer-Kontrollgerät zur Verfügung zu stellen oder umgekehrt, wobei das Informations-Aufzeichnungs-Mittel (5) eine individuelle Komponente ist; und
Daten-Verarbeitungs-Mittel (6) zum Aufzeichnen von Informationen, die in den Editier-Mitteln und in den Lese-Mitteln (3) gespeichert sind.

2. System gemäß Anspruch 1, wobei das Identifikations-Mittel (1) aus einer Gruppe ausgewählt wird, die aus Magnetkarten, intelligenten Karten und Chipschlüsseln besteht.

3. System gemäß Anspruch 1, wobei das Lese-Mittel (3) auch Mittel zum Erfassen und Aufzeichnen von Wagen-Zuständen beinhaltet, die aus einer Gruppe ausgewählt wurden, die aus von jedem Nutzer gefahrenen Geschwindigkeiten, Ölstand, dem Batterie-Zustand und dem Motor-Zustand besteht.

4. System gemäß Anspruch 1, wobei das Lese-Mittel (3) auch Mittel zum Erfassen und Aufzeichnen von Wagen-Zuständen beinhaltet, wie von jedem Kunden zurückgelegte Entfernungen.

5. System gemäß Anspruch 1, ferner ein Verwaltungs-System in einer zentralen Station beinhaltend, zum Aufzeichnen und Kontrollieren der gesamten Informationen von den Editier-Mitteln und von den Lese-Mitteln.

6. System gemäß Anspruch 1, wobei das Verwaltungs-System Daten-Verarbeitungs-Mittel beinhaltet, um die gesamte Information von den Editier-Mitteln und von den Lese-Mitteln zu empfangen und zu kontrollieren.

7. System gemäß Anspruch 1, wobei die Daten-Verarbeitungs-Mittel Mittel zum Lesen der Information von den Informations-Lese-Mitteln beinhalten.

8. System gemäß Anspruch 1, wobei das Mittel (B/E) zum Blockieren und Freigeben der Wagen-Systeme aus einer Gruppe ausgewählt wird, die aus einem Start-System, einer Zündung und einem Treibstoff-System besteht.

## Revendications

1. Un système pour autoriser l'utilisation d'au moins une voiture par un client, ce système comprenant :
des moyens d'identification (1) pour un client d'une pluralité de clients, comprenant : des cartes magnétiques, préalablement programmées avec des informations comprenant des données client, des heures et des dates pour permettre à un client d'utiliser ladite au moins une voiture ; des moyens de modification (2) pour enregistrer les informations dans lesdits moyens d'identification (1), pour autoriser un client particulier ayant lesdits moyens d'identification à (1) utiliser ladite au moins une voiture pendant des heures et des dates déterminées enregistrées dans lesdits moyens d'identification (1),
ce système étant **caractérisé par** :
des moyens de lecture (3) placés dans chaque voiture de ladite pluralité de voitures, ces moyens de lecture (3) comprenant des moyens pour y programmer des informations comprenant des données concernant chaque client de ladite pluralité de clients, lesdites données comprenant les heures et les dates durant lesquelles la voiture où sont placés lesdits moyens de lecture (3) peut être utilisée par chaque client de ladite pluralité de clients, dans lequel lesdits moyens de lecture (3) lisent les informations enregistrées dans lesdits moyens d'identification (1) et autorisent ledit client à accéder à ladite au moins une voiture et des moyens d'autorisation d'activation (B/E) pour bloquer et activer la voiture de ladite au moins une voiture si les informations programmées dans lesdits moyens de lecture (3) coïncident avec les informations enregistrées dans lesdits moyens d'identification (1) et permettent audit client d'utiliser ladite au moins une voiture à des dates et heures déterminées enregistrées dans lesdits moyens de lecture (3) et les moyens d'identification(1);
des moyens pour détecter et enregistrer des informations relatives aux états moteur, aux distances et aux vitesses appliquées à chaque voiture de ladite pluralité de voitures par ledit client de ladite pluralité de clients en coopération avec lesdits moyens de lecture (3);
des moyens de lecture d'information (5), coopérant avec lesdits moyens de lecture (3) et avec lesdits moyens de modification, afin de lire les informations enregistrées dans lesdits moyens de lecture (3), comprenant les heures et dates auxquelles chaque client de ladite pluralité de clients est autorisé à utiliser chaque voiture de ladite pluralité de voitures, des données client, des distances et vitesses appliquées à chaque voiture de ladite pluralité de voitures, et pour délivrer les informations à un contrôle informatique ou vice versa, lesdits moyens d'enregistrement d'informations (5) étant un composant individuel ; et
des moyens de traitement de données (6), pour enregistrer des informations conservées dans lesdits moyens de modification et dans lesdits moyens de lecture (3).

2. Le système tel qu'exposé dans la revendication 1, dans lequel les moyens d'identification (1) sont choisis dans le groupe formé par les cartes magnétiques, les cartes intelligentes et les clefs à puce.

3. Le système tel qu'exposé dans la revendication 1, dans lequel les moyens de lecture (3) comprennent également des moyens pour détecter et enregistrer des états de voiture choisies dans le groupe formé par les vitesses appliquées à la voiture par chaque utilisateur, l'état de l'huile, les états de la batterie et les états du moteur.

4. Le système tel qu'exposé dans la revendication 1, dans lequel les moyens de lecture (3) comprennent également des moyens pour détecter et enregistrer des états de voiture sur les distances parcourues par chaque client.

5. Le système tel qu'exposé dans la revendication 1, comprenant en outre un système de gestion à un poste central, pour enregistrer et contrôler toutes les informations provenant des moyens de modification et des moyens de lecture.

6. Le système tel qu'exposé dans la revendication 1, dans lequel le système de gestion comprend des moyens de traitement de données pour recevoir et contrôler toutes les informations provenant des moyens de modification et des moyens de lecture.

7. Le système tel qu'exposé dans la revendication 1, dans lequel les moyens de traitement de données comprennent des moyens pour lire les informations provenant des moyens de lecture des informations.

8. Le système tel qu'exposé dans la revendication 1, dans lequel lesdits moyens (B/E) pour bloquer et activer les systèmes des voitures sont choisis dans le groupe formé par le système de démarrage, l'allumage et le système de carburant.
